**Europäisches Patentamt**

**European Patent Office**

**Office européen des brevets**

(11) Numéro de publication : **0 325 548 B1**

(12)

# FASCICULE DE BREVET EUROPEEN

(45) Date de publication du fascicule du brevet :
**30.09.92 Bulletin 92/40**

(51) Int. Cl.$^5$ : **A01D 34/66**

(21) Numéro de dépôt : **89440003.5**

(22) Date de dépôt : **18.01.89**

(54) **Faucheuse rotative comportant des organes de coupe s'étendant au-dessus d'un carter par l'intermédiaire de paliers de guidage et d'entraînement.**

(30) Priorité : **22.01.88 FR 8800901**

(43) Date de publication de la demande :
**26.07.89 Bulletin 89/30**

(45) Mention de la délivrance du brevet :
**30.09.92 Bulletin 92/40**

(84) Etats contractants désignés :
**AT BE DE ES FR GB IT NL**

(56) Documents cités :
**EP-A- 0 110 812**
**EP-A- 0 240 084**

(56) Documents cités :
**EP-A- 0 240 086**
**FR-A- 2 518 672**
**GB-A- 1 147 813**
**GB-A- 2 002 622**
**GB-A- 2 068 703**
**GB-A- 2 089 636**
**Catalogue Massey-Fergusson, MF 51, 1730670 M1, 5/70**

(73) Titulaire : **KUHN S.A.**
**4, Impasse des Fabriques**
**F-67700 Saverne (FR)**

(72) Inventeur : **Neuerburg, Horst**
**6, rue des Aubépines**
**F-67700 Saverne (FR)**

## Description

La présente invention concerne une faucheuse munie d'une barre de coupe comportant des organes de coupe s'étendant au-dessus d'un carter et dont chacun est guidé et entraîné en rotation autour d'un axe dirigé vers le haut par un palier de guidage et d'entraînement qui comporte un boîtier centré dans un alésage correspondant pratiqué dans la partie supérieure du carter, un palier de guidage monté dans ledit boîtier et un arbre guidé dans ledit boîtier à l'aide du palier de guidage, ledit arbre étant muni à son extrémité supérieure d'une partie de fixation pour la fixation de l'organe de coupe correspondant et à son extrémité inférieure d'une roue dentée s'étendant à l'intérieur du carter et engrènant avec au moins une autre roue dentée également logée à l'intérieur dudit carter, ladite première roue dentée ayant un diamètre extérieur inférieur au diamètre de l'alésage correspondant pratiqué dans la partie supérieure du carter, chacun desdits paliers de guidage et d'entraînement étant fixé à la partie supérieure du carter par des organes d'assemblage comportant des vis dont la tige sort de la partie supérieure du carter et des écrous vissés sur lesdites tiges, ledit carter étant formé par ladite partie supérieure et une partie inférieure assemblées de manière amovible par des éléments d'assemblage.

On connaît une telle faucheuse (catalogue Pièces de Rechange MF 51 réf. 1730670 M1 (Ausgabe 1) 5/70). Cette faucheuse connue comporte une barre de coupe munie de disques de coupe rotatifs qui s'étendent au-dessus d'un carter formé par deux parties : une partie supérieure et une partie inférieure assemblées de manière amovible l'une à l'autre au moyen d'éléments d'assemblage. Chaque disque de coupe rotatif est guidé et entraîné en rotation autour d'un axe dirigé vers le haut par un palier de guidage et d'entraînement (cf. catalogue Pièces de Rechange, pages 10 à 13). Chaque palier de guidage et d'entraînement comporte un boîtier centré dans un alésage correspondant pratiqué dans la partie supérieure du carter, un palier de guidage monté dans ledit boîtier et constitué par deux roulements, et un arbre guidé dans le boîtier à l'aide du palier de guidage, cet arbre étant muni à son extrémité supérieure d'une partie de fixation pour la fixation du disque de coupe correspondant et à son extrémité inférieure d'une roue dentée ayant un diamètre extérieur inférieur au diamètre de l'alésage correspondant pratiqué dans la partie supérieure du carter. Après montage du palier de guidage et d'entraînement sur la partie supérieure du carter, sa roue dentée s'étend à l'intérieur de ce dernier et engrène avec au moins une autre roue dentée également logée à l'intérieur du carter. Chaque palier de guidage et d'entraînement est fixé à la partie supérieure du carter par des organes d'assemblage du type vis-écrou, comportant des vis dont la tête s'étend à l'intérieur du carter et dont la tige sort de la partie supérieure du carter au travers de trous qui y sont prévus à cet effet. La tige de chaque vis traverse également un trou respectif prévu dans la bride du palier de guidage et d'entraînement, et sur son extrémité débouchant de la bride est vissé un écrou après interposition d'une rondelle d'appui. Etant donné que les vis ne sont pas maintenues en rotation, il est nécessaire, pour effectuer le changement d'un palier de guidage et d'entraînement, de démonter la partie inférieure du carter pour bloquer la rotation des vis, afin de pouvoir desserrer, puis resserrer les écrous vissés sur la tige desdites vis. Comme le carter d'une telle barre de coupe contient un lubrifiant dans lequel baignent les roues dentées entraînant en rotation les disques de coupe rotatifs, cette intervention ne pourra être faite qu'en atelier. Une telle intervention immobilisera donc la machine pendant un temps relativement long à un moment où l'utilisateur en a justement un besoin pressant.

On peut alors imaginer de fixer rigidement les vis à la partie supérieure du carter. Cette solution n'est cependant pas très heureuse. En effet, les tiges des vis qui s'étendent en-dehors de la partie supérieure du carter peuvent être sérieusement endommagées chez le constructeur ou chez le concessionnaire lors du stockage ou de la manutention de la partie supérieure du carter avant montage. Dans ce cas, il deviendra impossible de visser les écrous correspondants sur les tiges endommagées. Selon le mode de fixation choisi, il peut également arriver qu'en cas de serrage excessif de l'écrou sur la vis, la fixation de la vis sur la partie supérieure du carter soit détériorée. En soudant la vis à la partie supérieure du carter, on peut certes bien serrer l'écrou sur la vis sans risque de détérioration, mais ce mode de fixation présente d'autres inconvénients. En effet, la tôle constituant la partie supérieure du carter peut se déformer lors du soudage, de sorte qu'après soudage, les tiges des vis ne sont pas parallèles entre elles, ce qui posera des problèmes pour faire passer celles-ci au travers des trous de passage aménagés dans le boîtier du palier de guidage et d'entraînement correspondant. Un deuxième inconvénient est que, compte tenu de la longueur des parties supérieures du carter, la manipulation de celles-ci pour souder les vis n'est pas aisée.

Dans la GB -A- 2068703 est également décrite une faucheuse qui comporte une barre de coupe munie de disques rotatifs de coupe qui s'étendent au-dessus d'un carter formé par deux parties : une partie supérieure et une partie inférieure assemblées de manière amovible l'une à l'autre. Chaque disque de coupe rotatif est guidé et entraîné en rotation autour d'un axe dirigé vers le haut par un palier de guidage et d'entraînement qui comporte :

– un boîtier centré dans un alésage correspondant pratiqué dans la partie supérieure du carter,

– un palier de guidage monté dans ledit boîtier et constitué par deux roulements, et

– un arbre guidé dans ledit boîtier à l'aide du palier de guidage, cet arbre étant muni à son extrémité supérieure d'un entraînement sur lequel est fixé le disque de coupe correspondant et à son extrémité inférieure d'une roue dentée ayant un diamètre extérieur inférieur au diamètre de l'alésage correspondant pratiqué dans la partie supérieure du carter.

Après montage du palier de guidage et d'entraînement sur la partie supérieure du carter, sa roue dentée s'étend à l'intérieur de ce dernier et engrène avec au moins une autre roue dentée également logée à l'intérieur du carter. Chaque palier de guidage et d'entraînement est fixé au carter par des organes d'assemblage du type vis-écrou. Ceux-ci comportent chacun une vis du type "JAPY" munie d'une tête ronde sous laquelle est prévue une collerette à section carrée destinée à immobiliser la vis en rotation. La tête de la vis s'étend à l'extrémité du carter et s'appuie sur le fond de la partie inférieure du carter alors que sa collerette carrée est logée dans un trou de forme similaire pratiqué dans la partie inférieure du carter. La tige de la vis traverse ensuite une entretoise s'étendant à l'intérieur du carter entre la partie inférieure et la partie supérieure du carter, puis un trou prévu dans la partie supérieure du carter et enfin un trou prévu dans la bride du boîtier du palier de guidage et d'entraînement. Sur l'extrémité de la tige sortant de la bride est vissé un écrou après interposition d'une rondelle d'appui.

Grâce à cette disposition, chaque palier de guidage et d'entraînement est aussi bien fixé à la partie supérieure qu'à la partie inférieure du carter. Cette fixation est donc particulièrement résistante. En sus, elle confère une très bonne rigidité au carter de sorte que ce mode de construction convient tout particulièrement aux barres de coupe de faucheuses destinées à être fortement sollicitées durant le travail. Cette disposition permet également de changer un palier de guidage et d'entraînement sans qu'il soit nécessaire, pour cela d'ouvrir le carter. Du reste, il sera également très aisé de remplacer une vis accidentellement détériorée. Cette disposition nécessite cependant de prévoir des trous de passage pour les vis dans la partie inférieure du carter. Comme le carter contient un lubrifiant dans lequel baignent les roues dentées, il y aura donc également lieu de prévoir une étanchéité au niveau de chaque vis pour éviter des fuites de lubrifiant.

Dans la FR-A- 2518672 est décrit un dispositif de montage à l'aide d'ensembles vis-écrou d'objets sur des parois de pièces en matière plastique, notamment pour le montage de roulettes sur le fond de bacs roulants. Chaque roulette comporte à sa partie supérieure une plaque percée de quatre trous qui coïncident avec quatre trous correspondants réalisés dans le fond du bac. Chaque ensemble vis-écrou est selon un premier exemple de réalisation constitué par une tige repliée à angle droit à ses extrémités, les parties repliées comportant des filetages. Selon un second exemple de réalisation, on a prévu une plaque métallique sur une face de laquelle sont fixées par soudure des tiges filetées. Selon un troisième exemple de réalisation il est prévu une plaque métallique dans laquelle on a pratiqué deux trous dans lesquels s'engagent et sont fixées par soudure des vis comportant une tête et un corps fileté. Selon un dernier exemple de réalisation, il est prévu une cornière comportant des orifices dans lesquels sont montées des vis comportant chacune une tête hexagonale et une partie filetée. Les têtes de vis ne sont pas fixées à la cornière, mais leurs dimensions sont adaptées à l'écartement entre les ailes verticales de la cornière. Après engagement des parties filetées de ces ensembles dans deux trous correspondants des quatre trous pratiqués dans le fond du bac et dans la plaque de la roulette, on met en place des écrous que l'on serre de façon conventionnelle. Grâce à la structure de ces dispositifs de montage, on assure une immobilisation en rotation des parties filetées pratiquement sans contrainte sur la matière plastique traversée par ces parties filetées, le couple lors du serrage des écrous étant en majeure partie, absorbé par l'élément liant les deux parties filetées entres elles.

Le but de la présente invention consiste à proposer des organes d'assemblage des paliers de guidage et d'entraînement sur le carter, simples et peu onéreux, garantissant une bonne fixation desdits paliers, ces organes d'assemblage étant tels :

– que la tige des vis soit correctement positionnée pour que le boîtier du palier de guidage et d'entraînement correspondant puisse être facilement monté,

– que le filetage de la tige des vis ne puisse pas être détérioré lors des manipulations ou des stockages de la partie supérieure du carter,

– que les vis ne puissent pas tourner lors du serrage ou du desserrage des écrous, - que les vis ne puissent pas tomber dans le carter lorsque les écrous sont enlevés, et

– que les vis puissent être changées en cas de détérioration accidentelle.

Ce but a été atteint en dotant la faucheuse telle que décrite dans l'introduction des caractéristiques suivantes :

a. chaque vis desdits organes d'assemblage fixant les paliers de guidage et d'entraînement à la partie supérieure du carter, est fixée sur un organe de maintien ;

b. l'organe de maintien s'étend à l'intérieur du carter ;

c. l'organe de maintien est en appui à l'intérieur du carter pour maintenir la tige de la vis en dehors de la partie supérieure du carter lorsque l'écrou correspondant n'y est pas vissé ;

    d. l'organe de maintien empêche la rotation de la vis lors du serrage ou du desserrage de l'écrou correspondant ;

    e. la vis et l'organe de maintien correspondant constituent un ensemble amovible.

Grâce à ces caractéristiques, les vis servant à fixer les paliers de guidage et d'entraînement sur la partie supérieure du carter ne seront mises en place qu'au moment du montage de la barre de coupe. En conséquence, ces vis ne peuvent pas être endommagées lors du stockage ou de la manutention de la partie supérieure du carter. Il est ensuite possible de desserrer et de resserrer les écrous vissés sur ces vis sans qu'il soit nécessaire de démonter la partie inférieure du carter, car l'organe de maintien empêche la rotation de la vis correspondante. En sus, l'organe de maintien maintient la vis correspondante sensiblement dans sa position adéquate de sorte que le palier de guidage et d'entraînement puisse être facilement monté et que la vis ne risque pas de tomber dans le carter lorsque le palier de guidage et d'entraînement correspondant a été démonté. En conséquence, il est donc possible que l'utilisateur change lui-même un palier de guidage et d'entraînement défectueux sans que la machine n'ait à être amenée dans un atelier, de sorte qu'en cas de panne sur un palier de guidage et d'entraînement, la machine pourra être réparée très rapidement. Compte tenu du fait que la vis et son organe de maintien constituent un ensemble amovible, il sera également possible de changer cet ensemble si la vis devenait défectueuse. Du reste, ces organes d'assemblage sont simples, peu onéreux et garantissent une bonne fixation des paliers de guidage et d'entraînement sur la partie supérieure du carter.

Les sous-revendications auxquelles il est fait expressément référence, concernent des perfectionnements de l'invention générale telle qu'elle est caractérisée dans la revendication 1.

Un exemple non limitatif de réalisation de l'invention est décrit ci-après en se référant au dessin annexé sur lequel :

    – la figure 1 représente une vue de dessus d'une faucheuse conforme à l'invention,

    – La figure 2 représente une vue de dessus à une échelle agrandie de la barre de coupe de la faucheuse de la figure 1 sans les organes de coupe qui n'ont été représentés qu'en traits mixtes.

    – La figure 3 représente à une échelle agrandie une vue en coupe suivant le plan III-III (figure 1) de la barre de coupe,

    – La figure 4 représente une vue en coupe suivant le plan IV-IV défini sur la figure 2, et

    – La figure 5 représente une vue en perspective d'un organe de maintien muni de deux vis.

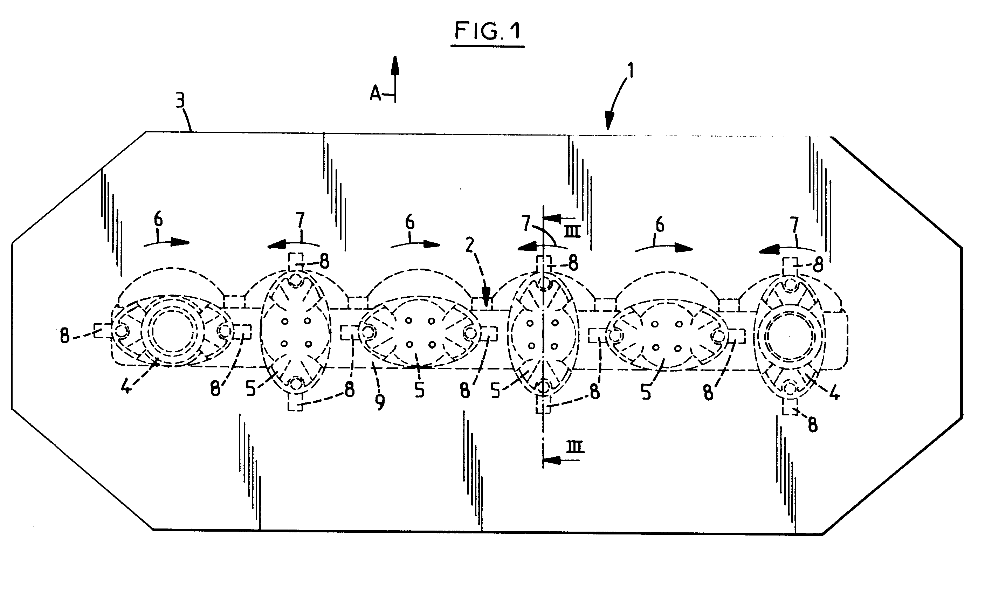

Sur la figure 1 est représentée une faucheuse (1) qui comporte une barre de coupe (2) s'étendant de manière connue sous un dispositif de protection (3).

Dans cette figure, on n'a pas représenté le dispositif permettant de lier ladite barre de coupe (2) à un véhicule tracteur. De tels dispositifs sont en effet à la portée de l'homme de l'art.

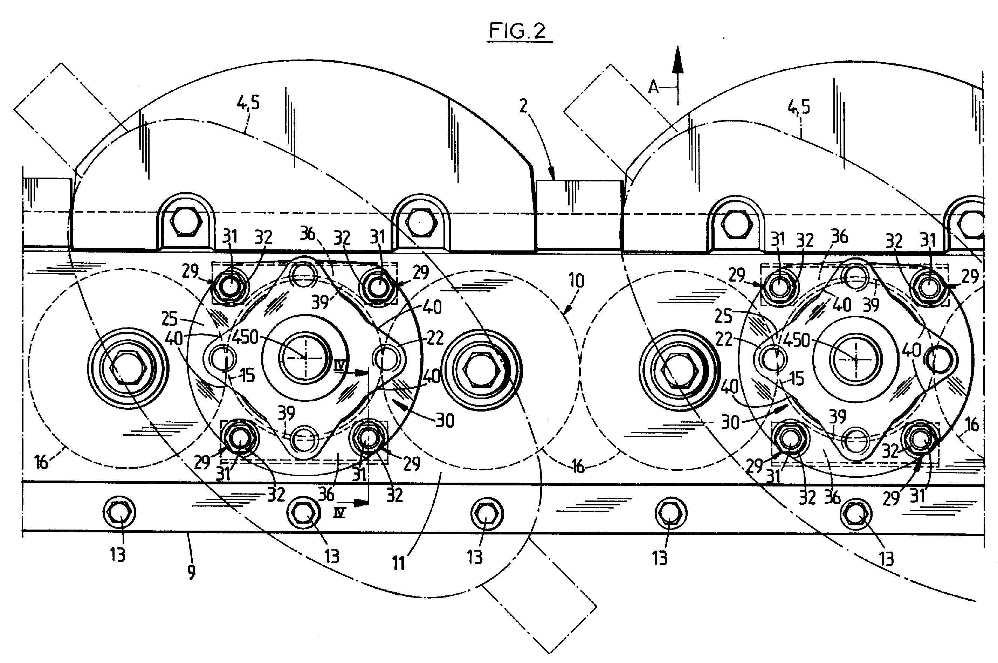

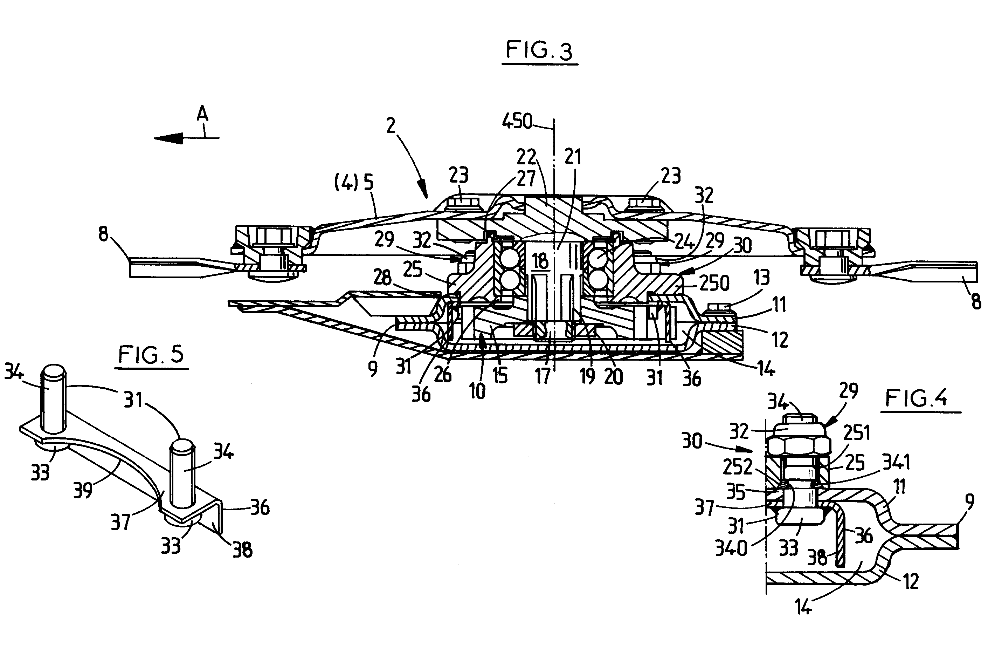

La barre de coupe (2) comporte de manière non limitative six organes de coupe (4, 5) tournant chacun autour d'un axe (450) (voir figures 2 et 3) dirigé vers le haut, par exemple dans les sens (6, 7). Chaque organe de coupe (4, 5) est muni de deux couteaux (8) et s'étend au-dessus d'un carter (9) dans lequel il est guidé en rotation et qui contient des organes d'entraînement (10) (figures 2 et 3) destinés à l'entraînement en rotation desdits organes de coupe (4, 5).

Sur les figures 2 et 3, on voit que le carter (9) est formé par une partie supérieure (11) et une partie inférieure (12) qui sont assemblées l'une à l'autre au moyen d'éléments d'assemblage (13). Après assemblage, les deux parties (11, 12) déterminent un espace sensiblement parallélépipédique (14) qui contient les organes d'entraînement (10). Ces organes d'entraînement (10) sont, dans l'exemple représenté, constitués par une cascade de roues dentées cylindriques (15) et de roues dentées cylindriques intermédiaires (16) engrènant les unes avec les autres et tournant dans un lubrifiant. Chaque roue dentée (15) est liée à l'extrémité inférieure (17) d'un arbre (18) au moyen de cannelures (19) et d'un écrou (20). A son extrémité supérieure (21), l'arbre (18) est lié à une partie de fixation (22). Cette partie de fixation (22) permet de fixer l'organe de coupe (4, 5) correspondant à l'arbre (18) et ceci au moyen de vis (23).

L'arbre (18) est guidé en rotation dans un palier de guidage (24) qui est, dans l'exemple représenté, constitué par un roulement à deux rangées de billes à contact oblique. Ce palier de guidage (24) est lui-même monté dans un boîtier (25) et y est lié en translation par un épaulement (26) et un circlips (27). Le boîtier (25) est centré dans un alésage (28) correspondant pratiqué dans la partie supérieure (11) du carter (9) et est fixé à ladite partie supérieure (11) au moyen d'organes d'assemblage (29). Le diamètre de l'alésage (28) est plus grand que le diamètre extérieur de la roue dentée (15) correspondante, mais plus petit que le diamètre extérieur du flasque (25) du boîtier (25).

L'ensemble constitué par un boîtier (25), le palier de guidage (24) correspondant, le circlips (27) servant à lier ce palier de guidage (24) au boîtier (25), l'arbre (18) correspondant, la partie de fixation (22) correspondante, la roue dentée (15) correspondante et l'écrou (20), forme donc un palier de guidage et d'entraînement (30) qui peut être monté ou démonté du carter (9) par le dessus puisque le diamètre extérieur de la roue dentée (15) est plus petit que le diamètre de l'alésage (28) correspondant.

Comme visible sur les figures 2 à 5, les organes d'assemblage (29) servant à fixer un boîtier (25) sur la partie supérieure (11) du carter (9) comportent notamment des vis (31) et des écrous (32). Dans l'exemple représenté, chaque boîtier (25) est fixé au moyen de quatre ensembles vis (31) - écrou (32). Chaque vis (31) a sa tête (33) qui s'étend à l'intérieur de l'espace parallélépipédique (14) et sa tige (34) qui sort de la partie supérieure (11) du carter (9) en traversant un trou (35) correspondant prévu à cet effet dans la partie supérieure (11). Afin de maintenir les vis (31) dans leur position adéquate, les vis (31) sont fixées (dans l'exemple représenté par soudage) à des organes de maintien (36). Dans l'exemple représenté, chaque organe de maintien (36) est muni de deux vis (31) de sorte que par boîtier (25), il y ait deux organes de maintien (36). Chaque organe de maintien (36) est constitué par une équerre dont une aile (37) s'étend sensiblement horizontalement et supporte les vis (31) et dont l'autre aile (38) s'étend sensiblement verticalement entre la partie supérieure (11) et la partie inférieure (12) du carter (9). Sur les figures 3 et 4, on voit que la hauteur de l'organe de maintien (36), c'est-à-dire dans l'exemple représenté, la longueur de l'aile verticale (38), est sensiblement égale à l'épaisseur intérieure du carter (9). Comme dit, chaque organe de maintien (36) est muni de deux vis (31) et la fixation de chaque palier de guidage et d'entraînement (30) nécessite donc deux ensembles organe de maintien (36) - vis (31). Sur la figure 2, on voit que ces organes de maintien (36) s'étendent sensiblement parallèlement à l'axe longitudinal du carter (9), de sorte à permettre l'engrènement entre la roue dentée (15) correspondante et les roues intermédiaires (16) voisines. On voit en sus sur les figures 2 et 5 que l'aile horizontale (37) d'un organe de maintien (36) comporte un évidement circulaire (39) centré sur l'axe de rotation (450) de la roue dentée (15) correspondante et d'un rayon légèrement plus grand que le rayon de ladite roue dentée (15).

Sur la figure 4, on voit enfin encore qu'à l'endroit où la tige (34) d'une vis (31) sort de la partie supérieure (11) du carter (9), ladite tige (34) est munie d'une gorge (340) environ demi-circulaire dans laquelle est monté un joint torique (341). Parallèlement, le trou de passage (251) correspondant prévu dans la flasque (250) du boîtier (25) correspondant, comprend, à l'endroit où il débouche sur la face dudit flasque (250) destinée à venir en contact avec la partie supérieure (11) du carter (9), un important chanfrein (252). Ainsi, lors du montage du palier de guidage et d'entraînement (30) sur la partie supérieure (11) du carter (9), le joint torique (341) remplit l'espace créé entre la gorge (340) et le chanfrein correspondant (252) et procure de ce fait une parfaite étanchéité empêchant toute fuite de lubrifiant contenu dans le carter (9).

Le montage de la barre de coupe (2) qui vient d'être décrite s'opère de la manière suivante :
– on place la partie supérieure (11) du carter (9) à l'envers ;
– on monte les différentes roues dentées intermédiaires (16) ;
– on met en place les ensembles organe de maintien (36) - vis (31), c'est-à-dire qu'on introduite les tiges (34) des vis (31) dans les trous (35) correspondants pratiqués dans la partie supérieure (11) ;
– on place la partie inférieure (12) sur la partie supérieure (11) et on assemble ces deux parties notamment à l'aide des éléments d'assemblage (13) ;
– on retourne l'ensemble de sorte que la partie supérieure (11) se trouve maintenant au-dessus. Dans cette position, les vis (31) seront sensiblement maintenues dans leur position adéquate par les organes de maintien (36) correspondants, étant donné que lesdits organes de maintien (36) ont une hauteur sensiblement égale à l'épaisseur intérieure du carter (9) ;
– on monte les paliers de guidage et d'entraînement (30) préalablement prémontés et on les fixe à l'aide des écrous (32) que l'on visse sur les tiges (34) des vis (31) correspondantes. Ceci est possible car durant le serrage d'un écrou (32) sur la tige (34) d'une vis (31), celle-ci est maintenue en rotation par l'intermédiaire de l'organe de maintien (36) correspondant et de l'autre vis (31) dont est également muni cet organe de maintien (36) ;
– on fixe enfin les organes de coupe (4, 5) sur les paliers de guidage et d'entraînement (30) correspondants à l'aide des vis (23).

Si au cours du travail, un palier de guidage et d'entraînement (30) devenait défectueux, l'utilisateur pourra le changer très rapidement lui-même et ceci sans qu'il soit nécessaire de démonter entièrement la barre de coupe (2). La faucheuse pourra donc être réparée dans le champ même et à moindre frais.

Il suffira en effet pour cela :
– de démonter l'organe de coupe (4, 5) correspondant au palier de guidage et d'entraînement (30) défectueux ;
– d'enlever les écrous (32) ;
– de sortir le palier de guidage et d'entraînement (30) défectueux ;
– de monter un nouveau palier de guidage et d'entraînement (30) ;
– de revisser les écrous (32) sur les tiges (34) des vis (31) correspondantes ; et
– de monter l'organe de coupe (4, 5) correspondant.

Sur la figure 2, on voit aussi la forme de la partie de fixation (22) de chaque palier de guidage et d'entraînement (30) permettant la fixation de l'organe de coupe (4, 5) correspondant. cette forme est telle que les écrous (32) servant à la fixation d'un palier de guidage et d'entraînement (30) sur la partie supérieure (11) du carter (9) soient facilement accessibles du dessus. Ceci permet l'emploi de visseuses entraînées par moteur lors du montage de la barre de coupe et contribue donc à réduire les coûts de montage. Dans l'exemple représenté, la partie de fixation (22) comporte quatre méplats (40) qui confèrent à ladite partie de fixation (22) en vue de dessus une forme générale sensiblement carrée. Cette forme spéciale permet l'accès simultané aux quatre écrous (32) de sorte qu'il sera possible d'employer des visseuses spéciales avec quatre têtes de serrage pour un serrage simultané des quatre écrous (32).

La barre de coupe (2) qui vient d'être décrite ci-dessus peut être utilisée dans une faucheuse classique, dans une faucheuse-andaineuse ou dans une faucheuse-conditionneuse.

Diverses modifications peuvent être apportées à l'exemple de réalisation décrit, sans qu'on ne sorte pour autant du cadre de la présente invention telle que revendiquée dans le jeu de revendications suivant.

## Revendications

1. Faucheuse (1) munie d'une barre de coupe (2) comportant des organes de coupe (4, 5) s'étendant au-dessus d'un carter (9) et dont chacun est guidé et entraîné en rotation autour d'un axe (450) dirigé vers le haut par un palier de guidage et d'entraînement (30) qui comporte un boîtier (25) centré dans un alésage (28) correspondant pratiqué dans la partie supérieure (11) du carter (9), un palier de guidage (24) monté dans ledit boîtier (25) et un arbre (18) guidé dans ledit boîtier (25) à l'aide du palier de guidage (24), ledit arbre (18) étant muni à son extrémité supérieure (21) d'une partie de fixation (22) pour la fixation de l'organe de coupe (4, 5) correspondant et à son extrémité inférieure d'une roue dentée (15) s'étendant à l'intérieur du carter (9) et engrenant avec au moins une autre roue dentée (16) également logée à l'intérieur dudit carter (9), ladite première roue dentée (15) ayant un diamètre extérieur inférieur au diamètre de l'alésage (28) correspondant pratiqué dans la partie supérieure (11) du carter (9), chacun desdits paliers de guidage et d'entraînement (30) étant fixé à la partie supérieure (11) du carter (9) par des organes d'assemblage (29) comportant des vis (31) dont la tige (34) sort de la partie supérieure (11) du carter (9) et des écrous (32) vissés sur lesdites tiges (34), ledit carter (9) étant formé par ladite partie supérieure (11) et une partie inférieure (12) assemblées de manière amovible par des éléments d'assemblage (13), caractérisée par le fait que chaque vis (31) desdits organes d'assemblage (29) fixant les paliers de guidage et d'entraînement (10) à la partie supérieure (11) du carter (9), est fixée sur un organe de maintien (36) :
   – qui s'étend à l'intérieur du carter (9),
   – qui est en appui à l'intérieur du carter (9) pour maintenir la tige (34) de la vis (31) en-dehors de la partie supérieure (11) du carter (9) lorsque l'écrou (32) correspondant n'y est pas vissé, et
   – qui empêche la rotation de la vis (31) lors du serrage ou du desserrage de l'écrou (32) correspondant,
   ladite vis (31) et l'organe de maintien (36) correspondant constituant un ensemble amovible.

2. Faucheuse selon la revendication 1, caractérisée par le fait que l'organe de maintien (36) maintient la tige (34) de la vis (31) en dehors de la partie supérieure (11) du carter (9) après montage de la partie inférieure (12) du carter (9) sur la partie supérieure (11) dudit carter (9).

3. Faucheuse selon l'une des revendications 1 ou 2, caractérisée par le fait que la hauteur de l'organe de maintien (36) est sensiblement égale à l'épaisseur intérieure du carter (9).

4. Faucheuse selon l'une au moins des revendications 1 à 3, caractérisée par le fait que la vis (31) est soudée à l'organe de maintien (36).

5. Faucheuse selon l'une au moins des revendications 1 à 4, caractérisée par le fait que chaque organe de maintien (36) est muni de plusieurs vis (31).

6. Faucheuse selon la revendication 5, caractérisée par le fait qu'entre deux vis (31), l'organe de maintien (36) comporte un évidement (39) évitant l'interférence avec l'une (15) au moins des roues dentées (15,16) s'étendant dans le carter (9).

7. Faucheuse selon la revendication 6, caractérisée par le fait que l'évidement (39) présente une forme circulaire d'un rayon légèrement plus grand que le rayon de la roue dentée (15) correspondante.

8. Faucheuse selon l'une au moins des revendications 1 à 7, caractérisée par le fait que l'organe de maintien (36) s'étend sensiblement parallèlement à l'axe longitudinal du carter (9).

9. Faucheuse selon l'une au moins des revendications 1 à 8, caractérisée par le fait que chaque organe de maintien (36) comporte deux vis (31) et qu'à chaque palier de guidage et d'entraînement (30) sont associés deux ensembles organe de maintien (36) - vis (31).

10. Faucheuse selon l'une au moins des revendications 1 à 9, caractérisée par le fait que l'organe de maintien (36) comporte au moins une aile (37) s'étendant sensiblement horizontalement et supportant la ou les vis (31).

11. Faucheuse selon la revendication 10 et l'une au moins des revendications 6 ou 7, caractérisée par le fait que l'évidement (39) est pratiqué dans ladite aile horizontale (37).

12. Faucheuse selon la revendication 10 ou 11, caractérisée par le fait que l'organe de maintien est constitué par une équerre dont l'une des ailes (37, 38) constitue ladite aile horizontale (37) et dont l'autre aile (38) s'étend sensiblement verticalement entre la partie supérieure (11) et la partie inférieure (12) du carter (9).

13. Faucheuse selon l'une au moins des revendications 1 à 12, caractérisée par le fait qu'à l'endroit où la tige (34) d'une vis (31) sort de la partie supérieure (11) du carter (9), ladite tige (34) est munie d'une gorge (340) dans laquelle est monté un joint (341), que le trou de passage (251) correspondant prévu dans le boîtier (25) comprend, à l'endroit où il débouche sur la face destinée à venir en contact avec la partie supérieure (11) du carter (9), un chanfrein (252), et que lors du montage du boîtier (25) sur la partie supérieure (11) du carter (9), le joint (341) remplit l'espace crée entre ladite gorge (340) et ledit chanfrein (252).

14. Faucheuse selon la revendication 11, caractérisée par le fait que la gorge (340) a un profil demi-circulaire et que le joint (341) est un joint torique.

15. Faucheuse selon l'une au moins des revendications 1 à 14, caractérisée par le fait que la partie de fixation (22) de chaque palier de guidage et d'entraînement (30) permettant la fixation de l'organe de coupe (4, 5) correspondant, a une forme adéquate autorisant l'accès, par au-dessus, aux écrous (32) des organes d'assemblage (29) fixant le palier (30) au carter (9) en vue du serrage et du desserrage desdits écrous (12).

16. Faucheuse selon la revendication 15, caractérisée par le fait que la partie de fixation (22) comporte au moins un méplat (40).

17. Faucheuse selon la revendication 16, caractérisée par le fait que le nombre de méplats (40) correspond au nombre d'écrous (32).

**Claims**

1. Mower (1) equipped with a cutterbar (2) comprising cutting elements (4, 5) extending above a housing (9) and each of which being guided and driven in rotation about an upwardly directed axis (450) by a guiding and driving bearing (30) which comprises a casing (25) centered in a corresponding bore (28) made in the upper part (11) of the housing (9), a guiding bearing (24) mounted in said casing (25), and a shaft (18) guided in said casing (25) by the means of the guiding bearing (24), said shaft (18) being provided at its upper end (21) with a fastening element (22) for fastening the corresponding cutting element (4, 5), and at its lower end with a toothed wheel (15) extending inside the housing (9) and meshing with at least another toothed wheel (16) also housed inside said housing (9), said first toothed wheel (15) having an outside diameter less than the diameter of the corresponding bore (28) made in the upper part (11) of the housing (9), each of said guiding and driving bearings (30) being fastened to the upper part (11) of the housing (9) by assembly elements (29) comprising bolts (31), the shank (34) of which comes out of the upper part (11) of the housing (9), and nuts (32) screwed on said shanks (34), said housing (9) being composed of said upper part (11) and a lower part (12) removably assembled together by the means of assembly members (13), characterized in that each bolt (31) of said assembly elements (29) fastening the guiding and driving bearings (30) to the upper part (11) of the housing (9), is fastened on a holding element (36) :

– which extends inside the housing (9),
– which rests on the inside of the housing (9) in order to hold the shank (34) of the bolt (31) outside the upper part (11) of the housing (9) when the corresponding nut (32) is not screwed on it, and
– which avoids the rotation of the bolt (31) during tightening or loosening of the corresponding nut (32),

said bolt (31) and the corresponding holding element (36) constituting a removable unit.

2. Mower according to claim 1, characterized in that the holding element (36) holds the shank (34) of the bolt (31) outside the upper part (11) of the housing (9) after mounting of the lower part (12) of the housing (9) to the upper part (11) of said housing (9).

3. Mower according to one of claims 1 or 2, characterized in that the height of the holding element (36) is approximately equal to the inner thickness of the housing (9).

4. Mower according to at least one of claims 1 to 3, characterized in that the bolt (31) is welded to the holding element (36).

5. Mower according to at least one of claims 1 to 4, characterized in that each holding element (36) is provided with several bolts (31).

6. Mower according to claim 5, characterized in that between two bolts (31), the holding element (36) is provided with a recess (39) avoiding interference with one (15) at least of the toothed wheels (15, 16) extending inside the housing (9).

7. Mower according to claim 6, characterized in that the recess (39) is of a circular shape with a radius slightly greater than the radius of the corresponding toothed wheel (15).

8. Mower according to at least one of claims 1 to 7, characterized in that the holding element (36) extends approximately parallel to the longitudinal axis of the housing (9).

9. Mower according to at least one of claims 1 to 8, characterized in that each holding element (36) comprises two bolts (31) and that to each guiding and driving bearing (30) are associated two units each made up of a holding element (36) and two bolts (31).

10. Mower according to at least one of claims 1 to 9, characterized in that the holding element (36) comprises at least one wing (37) which extends approximately horizontally and which supports the bolt(s) (31).

11. Mower according to claim 10 in combination with at least one of claims 6 or 7, characterized in that the recess (39) is made in said horizontal wing (37).

12. Mower according to claim 10 or 11, characterized in that the holding element is made up of an angle, one wing (37, 38) of which constituting said horizontal wing (37) and the other wing (38) extending approximately vertically between the upper part (11) and the lower part (12) of the housing (9).

13. Mower according to at least one of claims 1 to 12, characterized in that at the location where the shank (34) of a bolt (31) comes out from the upper part (11) of the housing (9), said shank (34) is provided with a groove (340) in which is housed a seal (341), that the corresponding passage hole (251) formed in the casing (25) comprises, at the location where it extends out of the face intended to come in contact with the upper part (11) of the housing (9), a chamfer (252), and that during mounting of the casing (25) on the upper part (11) of the housing (9), the seal (341) fills the space created between said groove (340) and said chamfer (252).

14. Mower according to claim 13, characterized in that the groove (340) is of a semicircular shape and that the seal (341) is an O-ring.

15. Mower according to at least one of claims 1 to 14, characterized in that the fastening element (22) of each guiding and driving bearing (30) for the fastening of the corresponding cutting element (4, 5) is shaped in such a manner to allow access from above to the nuts (32) of the assembly elements (29) fastening the bearing (30) to the housing (9) for tightening and loosening of said nuts (32).

16. Mower according to claim 15, characterized in that the fastening element (22) comprises at least one flat (40).

17. Mower according to claim 16, characterized in that the number of flats (40) is equal to the number of nuts (32).

**Patentansprüche**

1. Mähmaschine (1) mit einem Mähbalken (2) versehen mit sich über einem Balkengehäuse (9) erstreckenden Schneidorganen (4, 5), wovon jedes, mittels eines Führungs- und Antriebslagers (30), drehbar um eine nach oben gerichtete Achse (450) geführt und angetrieben ist, welches Lager ein in einer in dem oberen Teil (11) des Balkengehäuses (9) vorgesehenen entsprechenden Bohrung (28) zentriertes Gehäuse (25), ein in dem Gehäuse (25) montiertes Führungslager (24) und eine in dem Gehäuse (25) mittels des Führungslagers (24) geführte Welle (18) aufweist, wobei die Welle (18) an ihrem oberen Ende (21) mit einem Befestigungsteil (22) zur Befestigung des entsprechenden Schneidorgans (4, 5) und an ihrem unteren Ende mit einem sich im Inneren des Balkengehäuses (9) erstreckenden und mit zumindest einem anderen, ebenfalls im Inneren des Balkengehäuses (9) untergebrachten Zahnrad (16) eingreiffenden Zahnrad (15) versehen ist, welches einen äusseren Durchmesser aufweist, der geringer ist als der Durchmesser der in dem oberen Teil (11) des Balkengehäuses (9) vorgesehenen entsprechenden Bohrung (28), wobei jedes der Führungs- und Antriebslager (30) an dem oberen Teil (11) des Balkengehäuses (9) mittels Verbindungsorgane (29), die Schrauben (31) deren Schaft (34) aus dem oberen Teil (11) des Balkengehäuses (9) ragt, und auf die Schäfte (34) geschraubten Schraubenmuttern (32) aufweisen, befestigt ist, wobei das Balkengehäuse (9) aus dem oberen Teil (11) und einem unteren Teil (12), die abnehmbar mittels Verbindungselementen (13) miteinander verbunden sind, besteht, dadurch gekennzeichnet, dass jede Schraube (31) der die Führungs- und Antriebslager (30) mit dem oberen Teil (11) des Balkengehäuses (9) befestigenden Verbindungsorgane (29) auf einem Stützorgan (36) befestigt ist :

– das sich im Inneren des Balkengehäuses (9) erstreckt,

– das im Inneren des Balkengehäuses (9) abgestützt ist um den Schaft (34) der Schraube (31) ausserhalb des oberen Teils (11) des Balkengehäuses (9) zu halten, wenn die entsprechende Schraubenmutter (32) nicht draufgeschraubt ist, und

– das die Drehung der Schraube (31) bei dem Anziehen oder dem Abschrauben der entsprechenden Schraubenmutter (32) verhindert,

wobei die Schraube (31) und das entsprechende Stützorgan (36) eine abnehmbare Einheit bilden.

2. Mähmaschine nach Anspruch 1, dadurch gekennzeichnet, dass das Stützorgan (31) den Schaft (34) der Schraube (31) nach Anbringung des unteren Teils (12) des Balkengehäuses (9) auf den oberen Teil (11) des Balkengehäuses (9), ausserhalb des oberen Teils (11) des Balkengehäuses (9) hält.

3. Mähmaschine nach einem der Ansprüche 1 oder 2, dadurch gekennzeichnet, dass die Höhe des Stützorgans (36) im wesentlichen gleich ist wie die innere Dicke des Balkengehäuses (9).

4. Mähmaschine nach zumindest einem der Ansprüche 1 bis 3, dadurch gekennzeichnet, dass die Schraube (31) mit dem Stützorgan (36) geschweisst ist.

5. Mähmaschine nach zumindest einem der Ansprüche 1 bis 4, dadurch gekennzeichnet, dass jedes Stützorgan (36) mehrere Schrauben (31) aufweist.

6. Mähmaschine nach Anspruch 5, dadurch gekennzeichnet, dass zwischen zwei Schrauben (31), das Stützorgan (36) eine Aussparung (39) aufweist, die den Überschnitt mit zumindest einem (15) der sich im Balkengehäuse (9) erstreckenden Zahnrädern (15, 16) verhindert.

7. Mähmaschine nach Anspruch 6, dadurch gekennzeichnet, dass die Aussparung (39) kreisförmig ist, mit einem leicht grösseren Radius als der Radius des entsprechenden Zahnrades (15).

8. Mähmaschine nach zumindest einem der Ansprüche 1 bis 7, dadurch gekennzeichnet, dass das Stützorgan (36) sich im wesentlichen parallel zur Längsachse des Balkengehäuses (9) erstreckt.

9. Mähmaschine nach zumindest einem der Ansprüche 1 bis 8, dadurch gekennzeichnet, dass jedes Stützorgan (36) zwei Schrauben (31) aufweist, und dass jedem Führungs und Antriebslager (30) zwei aus einem Stützorgan (36) und zwei Schrauben (31) bestehenden Einheiten zugeordnet sind.

10. Mähmaschine nach zumindest einem der Ansprüche 1 bis 9, dadurch gekennzeichnet, dass das Stützorgan (36) zumindest einen sich im wesentlichen horizontal erstreckenden und die Schraube(n) (31) tragenden Schenkel (37) aufweist.

11. Mähmaschine nach Anspruch 10 und zumindest einem der Ansprüche 6 oder 7, dadurch gekennzeichnet, dass die Aussparung (39) in dem horizontalen Schenkel (37) vorgesehen ist.

12. Mähmaschine nach Anspruch 10 oder 11, dadurch gekennzeichnet, dass das Stützorgan aus einem Winkel dessen einen der Schenkel (37, 38) den horizontalen Schenkel (37) bildet und dessen anderen Schenkel (38) sich im wesentlichen senkrecht zwischen dem oberen Teil (11) und dem unteren Teil (12) des Balkengehäuses (9) erstreckt, besteht.

13. Mähmaschine nach zumindest einem der Ansprüche 1 bis 12, dadurch gekennzeichnet, dass an der Stelle an welcher der Schaft (34) einer Schraube (31) aus dem oberen Teil (11) des Balkengehäuses (9) ragt, der Schaft (34) mit einer Nut (340) versehen ist, in welcher eine Dichtung (341) montiert ist, dass die in dem Gehäuse (25) vorgesehene entsprechende Durchgangsbohrung (251) an der Stelle an welcher sie aus der Fläche, die dazu bestimmt ist mit dem oberen Teil (11) des Balkengehäuses (9) in Berührung zu kommen, mündet, eine Kante (252) aufweist und, dass bei dem Aufbau des Gehäuses (25) auf den oberen Teil (11) des Balkengehäuses (9), die Dichtung (341) den entstandenen Raum zwischen der Nut (340) und der kante (252) ausfüllt.

14. Mähmaschine nach Anspruch 13, dadurch gekennzeichnet, dass die Nut (340) ein halbrundes Profil aufweist und, dass die Dichtung (341) ein O-Ring ist.

15. Mähmaschine nach zumindest einem der Ansprüche 1 bis 14, dadurch gekennzeichnet, dass der Befestigungsteil (22) eines jeden die Befestigung des entsprechenden Schneidorgans (4, 5) erlaubenden Führungs- und Getriebelagers (30) eine angemessene Form hat, die den Zugang zu den Schraubenmuttern (32) der Verbindungsorgane (29), die das Lager (30) an dem Balkengehäuse (9) befestigen, zwecks Anziehen und Abschrauben der Schraubenmuttern (32) von oben erlaubt.

16. Mähmaschine nach Anspruch 15, dadurch gekennzeichnet, dass der Befestigungsteil (22) zumindest eine Abflachung (40) beträgt.

17. Mähmaschine nach Anspruch 16, dadurch gekennzeichnet, dass die Zahl der Abflachungen (40) der Zahl der Schraubenmuttern (32) entspricht.

FIG. 1

FIG.2

FIG. 3

FIG. 4

FIG. 5